Europäisches Patentamt

**European Patent Office**

Office européen des brevets

(19)

(11) Veröffentlichungsnummer: **0 081 772**
A2

(12) **EUROPÄISCHE PATENTANMELDUNG**

(21) Anmeldenummer: **82111216.6**

(22) Anmeldetag: **03.12.82**

(51) Int. Cl.³: **G 03 B 27/52**

(30) Priorität: **10.12.81 DE 3148908**

(43) Veröffentlichungstag der Anmeldung: **22.06.83**
**Patentblatt 83/25**

(84) Benannte Vertragsstaaten: **FR GB IT**

(71) Anmelder: **AGFA-GEVAERT Aktiengesellschaft,
D-5090 Leverkusen 1 (DE)**

(72) Erfinder: **Schätz, Anton, Sachranger Strasse 12,
D-8000 München 90 (DE)**
Erfinder: **Hoeft, Karl, Ludwig-Thoma-Strasse 4,
D-8034 Germering (DE)**

(54) **Belichtungsanordnung für Kopiergeräte.**

(57) Eine von Rasterlinsenleisten (6–8) gebildete Belichtungsanordnung für Kopiergeräte weist trapezförmige Zwischenbildblenden (10, 11) mit senkrecht zur Bewegungsrichtung (A) der Rasterlinsenleisten verlaufender Ober- und Unterkante (10a, 10b, 11a, 11b) und mit unter einem bestimmten Winkel ($\alpha$) schräg zu dieser Bewegungsrichtung verlaufenden Seitenkanten (10c, 11c) auf. Zur Erzielung einer möglichst gleichmäßigen Belichtung des Kopierträgers bei großer Lichtstärke der einzelnen Abbildungselemente und geringer Bewegungsunschärfe des gesamten Abbildungssystems entspricht die Außenform der die Rasterlinsenleisten (6–8) bildenden Linsenelemente (6a, 7a und 8a), der Rautenform der Zwischenbildblenden. Die Schräglage der Zwischenbildblenden und der Linsenelemente ist so bemessen, daß der Tangens des Neigungswinkels ($\alpha$) der durch die Summe der Länge ($b_a$) der Rautengrundlinie und des Abstandes ($b_a$) zwischen den Rauten geteilten Rautenhöhe ($h_a$) entspricht.

AGFA-GEVAERT AG LEVERKUSEN
Camera-Werk München
Patent- und Lizenzwesen

CW 2578.5 PB/MB                                    2578.5 PB/MB
                                                   51-bg-se, 0585C


Belichtungsanordnung für Kopiergeräte


Die Erfindung betrifft eine Belichtungsanordnung für Kopiergeräte nach
dem Gattungsbegriff der Ansprüche.

Eine derartige Anordnung ist u.a. Gegenstand der DE-OS 27 57 386. Die
Überlappung benachbarter Blendenbereiche dient bei dieser Anordnung dazu,
die durch die Einzelobjektive erzielten Teilabbildungen der Vorlage auf
dem Kopieträger zu einem Gesamtbild gleicher Helligkeit zusammenzufügen.
Bei den bekannten Einrichtungen dieser Art ist zur Erzielung einer ausreichenden Lichtstärke des Abbildungssystems in aller Regel mehr als eine
in Bewegungsrichtung hintereinander liegende Linsenleiste vorgesehen, wobei die Einzelobjektive der hintereinanderliegenden Linsenleisten diagonal zueinander versetzt sind. Bei dieser Anordnung kann es infolge des
verschiedenen Belichtungszeitpunktes der Teilabbildungen leicht zu Bewegungsunschärfen kommen.


CW 2578.5 PB/MB

Es ist das Ziel der vorliegenden Erfindung, eine Belichtungsvorrichtung der eingangs genannten Art in der Weise weiterzuentwickeln, daß mit einfachen Mitteln, bei großer Lichtstärke und hoher Abbildungsgüte eine Abbildung gleichmäßiger Helligkeit auf dem Kopieträger zustande kommt. Diese Aufgabe wird gemäß der Erfindung durch die im Gattungsbegriff von Anspruch 1 aufgeführten Merkmale erreicht.

Einzelheiten der Erfindung ergeben sich aus den Unteransprüchen und der Beschreibung, worin im folgenden anhand der Zeichnung ein Ausführungsbeispiel erörtert wird. Es zeigen

Fig. 1  einen Schnitt durch eine erfindungsgemäße Belichtungsanordnung entlang der Linie I-I in Figur 2,

Fig. 2  einen Schnitt durch die Anordnung entlang der Linie II-II in Figur 1,

Fig. 3  die geometrischen Verhältnisse an der Zwischenbildblende.

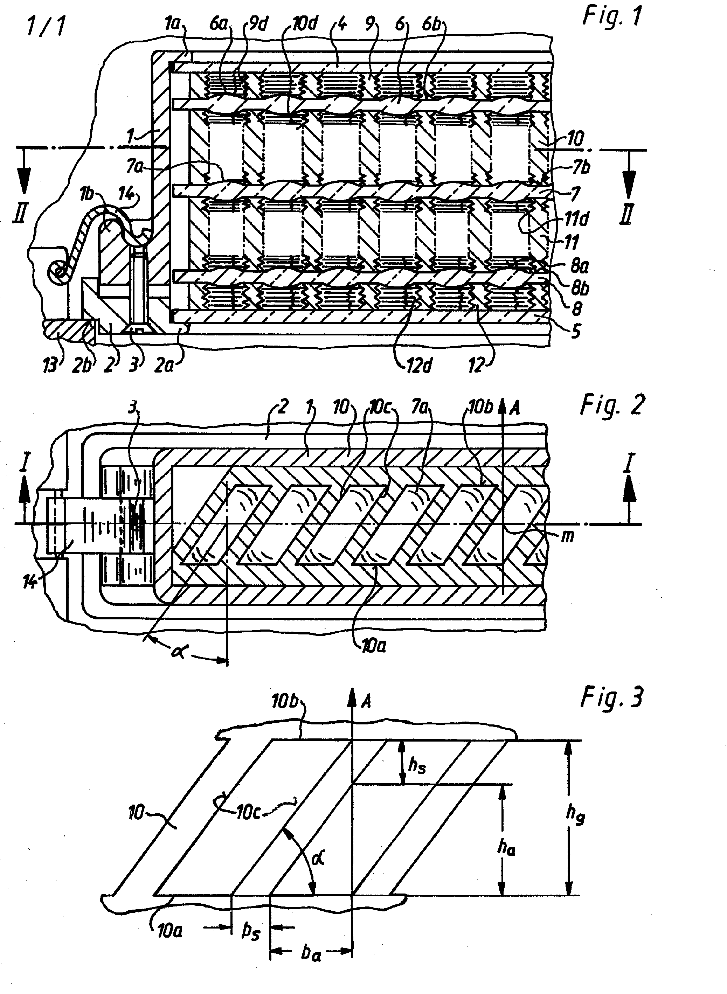

Gemäß den Figuren 1 und 2 ist ein als Fassung für ein Rasterabbildungssystem dienendes Objektivgehäuse 1 durch einen mittels Schrauben 3 aufgeschraubten Deckel 2 nach außen abgeschlossen. Sowohl das Objektivgehäuse 1 als auch der Deckel 2 weisen einen überstehenden Rand 1a bzw. 2a auf, welcher die in dem Gehäuse 1, 2 enthaltenen Teile der Belichtungsanordnung umgreift. Es sind dies je ein zum äußeren Abschluß dienendes Deckglas 4 bzw. 5, je eine Linsenleiste 6, 7 und 8, sowie je ein Blendenkörper 9, 10, 11 und 12. Die Blendenkörper 10 und 11 dienen zugleich als Abstandshalter zwischen den Linsenleisten 6, 7 und 8.

Die Linsenleisten 6, 7 und 8 sind einstückig aus Kunststoff, z.B. Polymethylmethacrylsäureester (PMMA), gespritzt und tragen eine Reihe von Linsenelementen 6a, 7a und 8a. Jeweils zwei hintereinander liegende Linsenelemente 6a und 8a bilden ein Abbildungselement, welches ein Teilbild der Vorlage auf den Kopieträger abbildet und dabei zwischen den Linsenelementen eine Zwischenabbildung erzeugt. Infolge der der Bildumkehr dienenden Zwischenabbildungen lassen sich die Teilabbildungen in bekannter Weise lückenlos aneinanderfügen. Die Linsenleiste 7 ist am Ort der Zwischenabbildung angeordnet. Ihre Linsenelemente 7a wirken bei dem vorstehend beschriebenen Abbildungsvorgang als Feldlinsen.

Wie aus Figur 2 ersichtlich ist, liegen alle Mittelachsen (m) der Linsenelemente 7a, 6a und 8a in einer gemeinsamen, zur Bewegungsrichtung A der Linsenleisten 6-8 sowie zur Ebene von Vorlage und Kopieträger senkrechten Ebene. Die Außenform der sphärischen Linsenflächen bildet jeweils eine Raute, deren Grundfläche senkrecht auf der Bewegungsrichtung A der Linsenleisten steht und deren Seitenflächen unter einem Winkel $\alpha$ gegen die Bewegungsrichtung A der Linsenleisten 6-8 geneigt sind. Zwischen den Rautenflächen weisen die Linsenleisten jeweils ein ebenes Flächenstück bzw. einen Steg 6c, 7c, 8c auf, auf welchen sich die Blendenkörper 9-12 abstützen, so daß die Blendenkörper 9-12, die Linsenleisten 6-8 und die Deckgläser 4 und 5 beim Anziehen der Schrauben 3 zu einem ebenen Paket verschraubt werden, in welchem die Linsenleisten 6-8 einen genau definierten Abstand voneinander aufweisen. Zum Schutz gegen Lichtreflexe ist die den Blendenausschnitt bildende Innenseite der Blendenkörper 9-12 mit Riefen 9a bzw. 10a bzw. 11a bzw. 12a versehen.

Wie aus Figur 3 ersichtlich ist, sind die seitlichen Begrenzungen 10c der Zwischenbildblenden um einen Winkel $\alpha$ geneigt, welcher mindestens 10°, vorzugsweise etwa 30°, beträgt. Der Tangens dieses Winkels steht mit der Gesamthöhe $h_g$ der die Zwischenbildblende bildenden rautenförmigen Blendenöffnung und mit der Weite $b_a$ der Blendenöffnung sowie mit der Breite $b_s$ der zwischen den Öffnungen verbleibenden Stege im Verhältnis

$$tg\ \alpha = \frac{h_g}{b_s + b_a} \ . \qquad \text{I.)}$$

Dadurch wird erreicht, daß beliebige Parallele zur Bewegungsrichtung A die Blendenausschnitte und die Stege auf einer Länge durchschneiden, welche sich jeweils zu einer gleichbleibenden Gesamtlänge $h_s$ für die Stege und $h_a$ für die Ausschnitte addiert, so daß sich eine quer über den gesamten Kopieträger gleichbleibende Belichtungslänge für den Kopieträger ergibt.

Aus Figur 1 ist schließlich noch ersichtlich, daß das Gehäuse 1, 2 der Belichtungsanordnung mit seitlichen Absätzen 2b je einem Träger 13 des Kopiergerätes aufliegt und dort mittels einer hinter eine Nase 1b des Objektivgehäuses 1 greifenden Schnappfeder 14 festgehalten wird.

AGFA-GEVAERT AG LEVERKUSEN
Camera-Werk München
Patent- und Lizenzwesen

CW 2578.5 PB/MB                          2578.5 PB/MB
                                         51-bg-se, 0585C

<u>Ansprüche</u>

1. Belichtungsanordnung für Kopiergeräte, bei der die Vorlage durch
   mehrere relativ zur Vorlage gemeinsam bewegte Objektive streifenweise auf einen Kopieträger abgebildet wird, wobei die Objektive aus
   mehreren in Richtung des Strahlenganges hintereinander angeordneten
   Linsenleisten bestehen, zwischen denen in einer Zwischenbildebene
   Blenden angeordnet sind, deren Öffnungen so auf den Kopieträger abgebildet werden, daß sich die Randbereiche zweier quer zur Bewegungsrichtung der Linsenleisten benachbarter Blendenöffnungen in Bewegungsrichtung der Linsenleisten überlappen, <u>dadurch gekennzeichnet,</u> daß

   - die Linsenleisten (6-8) von Linsenelementen gebildet werden,
     deren Mittelachsem (m) in einer gemeinsamen, zur Kopieträgerebene und zur Bewegungsrichtung der Linsenleisten senkrechten
     Ebene liegen,

CW 2578.5 PB/MB

- die die Linsenleisten (6-8) bildenden Linsenelemente (6a-8a) zumindest quer zur Bewegungsrichtung (A) der Linsenleisten durch ebene Abschlußkanten begrenzt sind,

- die Abschlußkanten der Linsenelemente (6a-8a) schräg zur Bewegungsrichtung (A) der Linsenleisten angeordnet sind.

2. Belichtungseinrichtung nach Anspruch 1, dadurch gekennzeichnet, daß Form und Größe der Linsenelemente (6a-8a) mit der lichten Öffnung der Zwischenbildblenden (10, 11) übereinstimmt.

3. Belichtungseinrichtung nach Anspruch 1 oder 2, dadurch gekennzeichnet, daß die Linsenleisten (6-8) einstückig aus Kunststoff gefertigt sind, daß die Zwischenbildblenden von je einem die hintereinander angeordneten Linsenelemente (6a-8a) eines Objektives verbindenden Schacht (10, 11) gebildet werden, und daß an den Linsenleisten (6-8) zumindest zwischen den Linsenelementen (6a-8a) ein als Auflagefläche für den der Linsenleiste benachbarten Rand des Schachtes (10, 11) dienenden Steg (6c, 7c, 8c) ausgebildet ist.

4. Belichtungseinrichtung nach Anspruch 3, dadurch gekennzeichnet, daß die Innenseite des Schachtes (10, 11) mit reflexmindernden Riefen oder Stufen (9d-12d) versehen ist.

5. Belichtungseinrichtung nach einem der vorhergehenden Ansprüche, dadurch gekennzeichnet, daß die seitlichen Abschlußkanten der Linsenelemente (6a-8a) mit der Bewegungsrichtung (A) der Linsenleisten einen Winkel ( $\alpha$ ) von mindestens $10^\circ$, vorzugsweise etwa $30^\circ$, bilden.

6. Belichtungseinrichtung nach einem der vorhergehenden Ansprüche, dadurch gekennzeichnet, daß sowohl die Öffnungen der Zwischenbildblenden (10, 11) als auch die äußere Begrenzung der Linsenelemente (6-8) Trapezform aufweisen, wobei die in Bewegungsrichtung (A) der Linsenleisten vorderen und hinteren Begrenzungskanten der Linsenelemente jeweils in einer zu dieser Bewegungsrichtung senkrechten Ebene liegen.

7. Belichtungseinrichtung nach Anspruch 6, dadurch gekennzeichnet, daß die von den Zwischenbildblenden (10, 11) freigegebene, rautenförmige Linsenfläche ebenfalls Trapezform mit zur Bewegungsrichtung (A) der Linsenleisten senkrechten vorderen und hinteren Begrenzungskanten aufweist, und daß die seitlichen Abschlußkanten der freien Linsenflächen um einen Winkel ($\alpha$) gegen die Bewegungsrichtung (A) der Linsenleisten geneigt ist, dessen Tangens der durch die Summe von Rautengrundlinie (ba) einer freien Linsenfläche und Breite ($b_s$) der zwischen den Linsenelementen verbleibenden Stege geteilten Rautenhöhe (hg) entspricht.

Hierzu 1 Blatt Zeichnungen

CW 2578.5 PB/MB

Fig. 1

1/1

Fig. 2

Fig. 3